# EUROPEAN PATENT SPECIFICATION

(11) **EP 2 509 826 B1**
(45) Date of publication and mention of the grant of the patent: **27.08.2014**
(21) Application number: 10796317.5
(22) Date of filing: 07.12.2010
(51) Int. Cl.: B60R 13/08, F16L 5/02, G05G 1/04

(54) **CABLE SEALING ARRANGEMENT**
KABELDICHTUNGSANORDNUNG
AGENCEMENT D'ÉTANCHÉITÉ DE CÂBLE

(30) Priority: 11.12.2009 GB 0921688
(43) Date of publication of application: 17.10.2012
(73) Proprietor: AGCO GmbH, 87616 Marktoberdorf (DE)
(72) Inventor: BARZEN, Alexander, 76275 Ettlingen (DE); GROß, Franz, 87616 Wald (DE)
(74) Representative: AGCO Intellectual Property Department
(86) International application number: PCT/EP2010/069073
(87) International publication number: WO 2011/070016

(56) References cited:
- EP-A1- 0 348 668
- EP-A1- 1 101 990
- DE-A1- 3 500 655
- DE-A1- 3 524 278
- US-A- 5 567 916

## Description

This invention relates to a sealing arrangement for the passage of a cable, or pipe through a wall, or panel on a vehicle. More specifically, this arrangement relates to a sealing arrangement for the passage of a cable or pipe through a cab wall, or cab panel on a vehicle.

Cable sealing arrangements are used for threading cables, pipes or tubing through a thickness of material, see e.g. DE-A-3524278. For example, such arrangements may be used on a tractor when threading a cable, or pipe from the outside of a tractor cab to the inside of a cab through a cab panel.

It is already known to drill a hole through a tractor cab panel and use a grommet with a rubber membrane to cover the hole to prevent fluid passing through the hole. If the hole is required to receive a cable, or pipe or tubing the rubber membrane may be pierced and the cable inserted through the membrane and hole. With this method, the rubber may fit snugly around the cable or pipe as a seal to prevent fluid passing through the hole. However, if a smaller sized cable/pipe is to be fitted through the same membrane, the seal between the cable/pipe and the membrane will not be so secure. If a cable/pipe is no longer to be fitted there is also the problem that the hole, once used is no longer sealed. In such a case a complete new seal may be fitted which has time and cost implications.

It is an object of the present invention to provide a sealing arrangement for the passage of a cable, or pipe through a wall or panel on a vehicle which overcomes or improves the short comings of the known sealing arrangements.

According to the invention there is provided a sealing arrangement for the passage of a cable or pipe through a panel of a vehicle cab, the arrangement comprising an insert for insertion into a complementary cut-out in an edge of the panel, the insert having a hole through which the cable or pipe can pass and a slit joining the hole to an edge of the insert in order to allow the cable or pipe to be inserted into the hole and a first securing means for holding the insert in the cut out.

Preferably, the vehicle is a tractor.

Preferably, the arrangement is provided with a closure member for closing the hole when no cable or pipe is passing through the insert. This seals the hole preventing any fluid or moisture entering the insert when the insert is not being used. The closure member is preferably a plug

Preferably, a plurality of inserts are provided for use in corresponding cut outs which are provided in a support rail for attachment to the cab to define a length of the window aperture.

More preferably, the support rail is received in a recess formed in an edge of a window aperture of the cab.

In accordance with a first embodiment of the invention the first securing means preferably comprises a first generally U shaped member one limb of which is supported from the cab and the other limb of which engages a second locating formation in the insert to hold the insert in the cut out.

Preferably, the arrangement comprises a second securing means for holding the closure member in the hole.

The second securing means preferably comprises a second generally U shaped member one limb of which is supported from the closure member and the other limb of which engages a second locating formation in the insert to hold the closure member in the insert.

Preferably, the insert has a formation in a peripheral edge portion which engages a formation surrounding the cut out to prevent the insert from moving out of the cut out in a direction generally parallel to the direction in which the cable or pipe extends through the insert.

In accordance with a further embodiment of the invention the insert is preferably of a spherical form which is mounted within the complementary cut out for rotation about one axis.

In this case, the slit extends around at least a portion of the surface of the insert. Preferably, the slit extends through at least two antipodals.

Preferably, the slit is provided with a compressible material. More preferably, the material is a rubber material.

The insert preferably comprises a hole which extends along the length of the slit and which increases in depth towards the centre of the sphere shaped insert.

Preferably, the cut out is connected to a drain for collecting any fluid which enters the cut out. This way even if unwanted fluid.enters the insert, it is drained away through the cut out.

The invention will now be described, by way of example only, with reference to the following drawings in which:
Figure 1 is a perspective view of a guide rail comprising a series of cable sealing arrangements according to one embodiment of the invention, ,
Figure 2 is a perspective view of the guide rail of figure 1 fitted with a cable,
Figure 2b is a cross sectional view of figure 2a along line A-A,
Figure 3 shows an end view of the sealing arrangement shown in figure 1,
Figure 4a shows an exploded perspective view of a second embodiment of a cable sealing arrangement according to the invention,
Figure 4b shows a perspective view of figure 4a when assembled,
Figure 4c shows a cross sectional plan view from above of figure 4b along line D-D, and
Figures 5a to 5c show cross sectional views of the arrangement of figure 4b taken along line C-C.

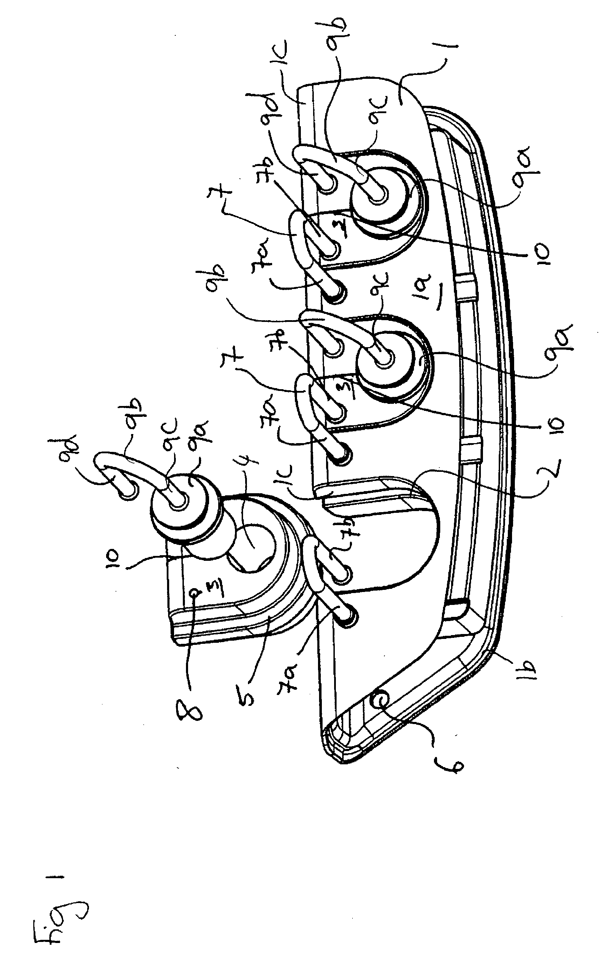

Figure 1 is a first embodiment of the invention showing a perspective front view of a support rail 1 with three inserts 3. The inserts are for use in a vehicle panel, such as a tractor cab panel to provide a sealable hole between the exterior of the panel and the interior of the panel through which a cable or pipe may pass.

For the avoidance of doubt, the term panel used herein is used to describe both static and moveable structures which form a part of the exterior shell of a vehicle cab and includes walls and windows.

By pipe it is meant any conduit which can carry a fluid and covers for example, the terms tubing and piping.

Each of the three inserts 3 sit in a cut out 2. One or more cut outs 2 may be made directly in the edge of the panel of the cab, (not shown) or alternatively the cut outs 2 may be provided in a support rail 1 as shown in figure 1 which can be attached to an edge of a cab panel. The support rail in figure 1 shows three U-shaped cut outs for receiving three correspondingly shaped inserts 3. Shorter or longer support rails comprising fewer or greater cut outs could also be used.

In figure 1, the left insert 3 is shown removed from the cut out 2.

The rail comprises two panels, an exterior panel 1a and an opposing internal panel 1b which are kept in a spaced apart arrangement by a connector element 1c which extends across the top of the panels and between the cut outs 2. The rail may be fitted over an edge of a tractor cab panel so that an exterior panel 1a lies on the exterior of the cab and the interior panel 1b lies on the interior of the cab.

The insert 3 comprises a U shaped device, made from a rubber material such as nitrile butadiene rubber (NBR), ethylene propylene diene monomer (m-class) rubber (EPDM), styrene butadiene rubber (SBR), or a silicone rubber which is provided with a hole 4 through its central portion for receiving a cable or pipe. The hole 4 is covered with a membrane which is pierced by an inserted cable, or pipe when the insert is used for the first time. A slit 10 extending vertically from the upper surface of the insert 3 to the hole 4 is provided to enable a cable, or pipe to be easily inserted into the hole 4 by pushing the cable/pipe downwards in the slit 10. When the insert 3 is sitting in a respective cut out 2, the slit 10 is closed.

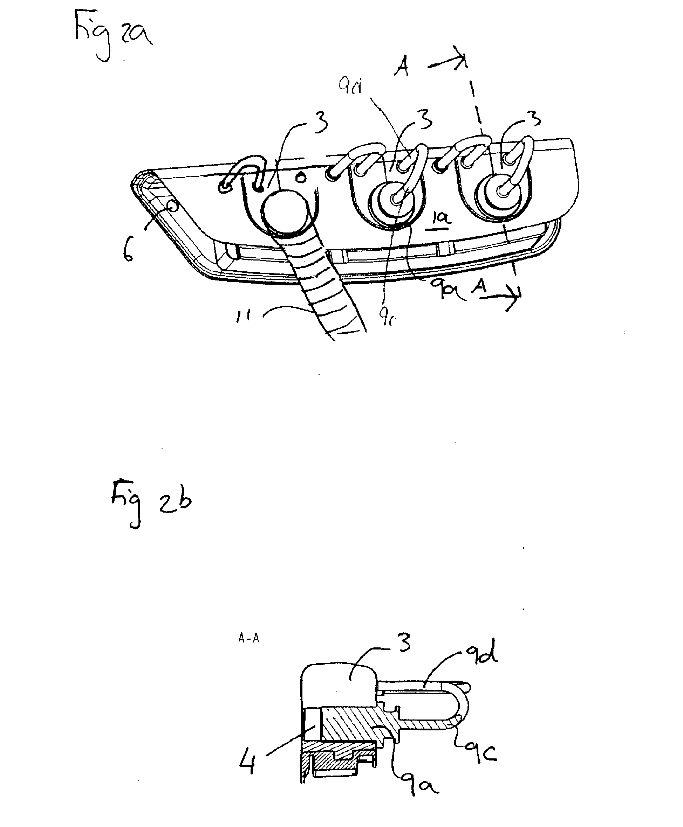

The inserts 3 are provided with peripheral grooves 5 which correspond with complementary grooves surrounding the cut outs 2. When the insert 3 is inserted into the cut out 2, the groove formation prevents movement of the insert within the cut out in a direction parallel to the direction in which the cable or pipe extends (see figure 2a). The rail 1, or cab panel is provided with a U shaped securing means 7 comprising two limbs. A first limb 7a is attached to the rail 1 or cab panel and the second limb 7b is attachable to an aperture 8 on the insert 3 to hold the insert in place within the cut out 2. The securing means 7 is rotatable about its first limb 7a so as not to prevent the insertion of the insert 3 into the cut out 2.

Each insert 3 is further provided with a closure member 9a, for example a plug which is used to seal the hole 4 when not in use. The closure member 9a is provided with a further U-shaped securing means 9b comprising two limbs. A first limb 9c is attached to the plug/closure member and a second limb 9d is attachable to the insert 3.

The support rail 1 may be mounted, for example to a rear panel of a tractor cab (not shown) when it is necessary to pass a cable, or pipe, for example from the exterior of the cab through to the interior of a cab. The cable or pipe may, for example be from an electronic display/control or an hydraulic valve with a manual lever mounted inside the cab for controlling an implement on the exterior of the cab. If the support rail 1 is used it is attached to an edge of a cab panel using fixing means, such as screws or bolts and the attachment holes 6. If no rail is used, the complementary cut out is formed in an edge of the rear cab panel. If it is required to insert a cable or tubing through the cab panel, the closure member 9a can be removed and the cable/pipe pushed down the slit 10 into the hole 4 and passed through into the cab. A further cab element, such as a further panel is fitted in abutment with the top of the insert or rail 1 to secure the insert within the cab structure.

If no cable/pipe is to be inserted, the closure member 9a may be left in the hole 4 sealing it and preventing fluid from entering the hole.

Figure 2a is a perspective view of the support rail 1 showing the same features as figure 1. The first insert 3 on the left has its closure member 8 removed and a cable 11 passed through the hole 4. Figure 2b is a cross sectional view along line A-A of Figure 2a.

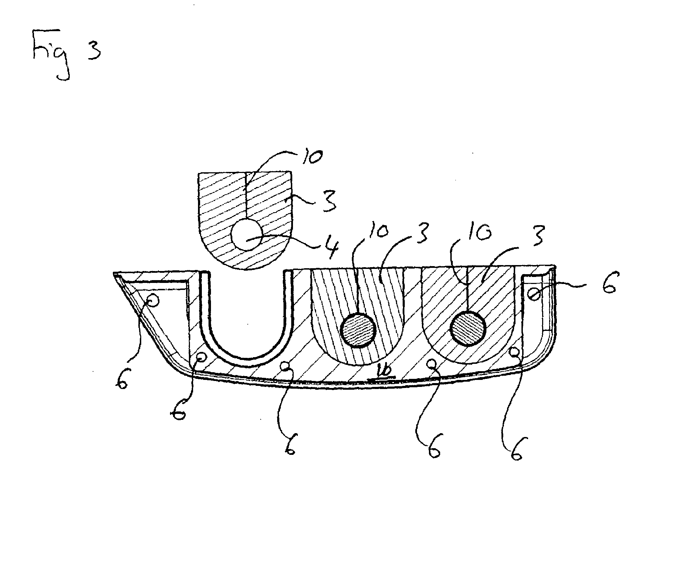

Figure 3 shows an end view of the interior panel 1b of the rail 1 showing further attachment holes 6.

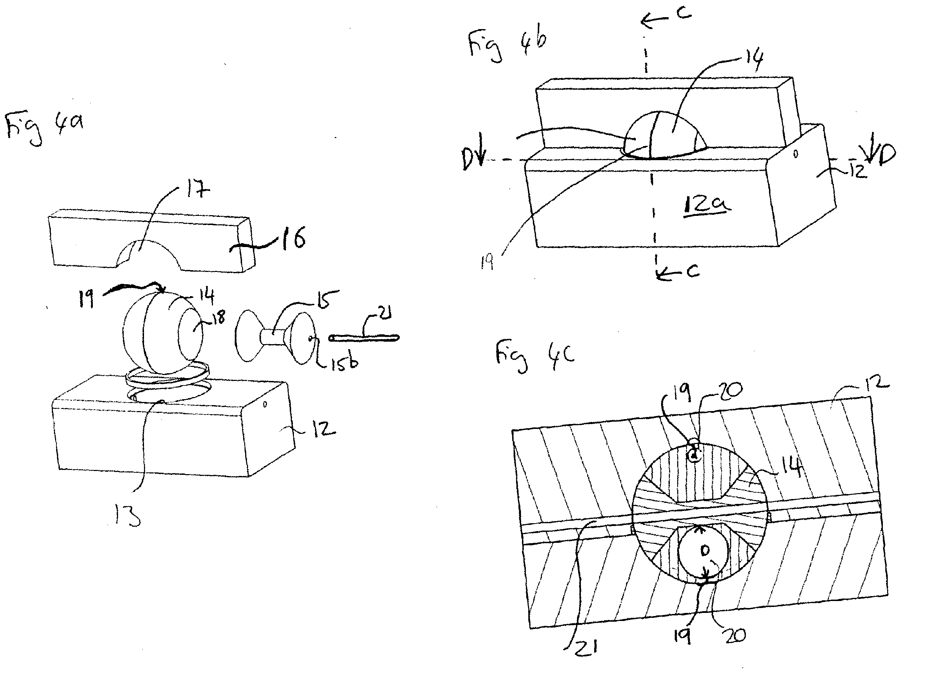

Figure 4a is an exploded perspective view of a second embodiment of a cable sealing arrangement according to the invention. Figure 4b shows a perspective view of figure 4a when assembled. Figure 4c shows a cross sectional plan view from above of figure 4b along line D-D.

The arrangement shown in figure 4a comprises a support rail 12 which has a rounded hollow cut out 13 suitable for receiving a spherical, or ball shaped insert 14. The spherically shaped insert 14 is mounted on a pivot pin 15 which is affixed to the support rail 12 by a bearing axle 21 which extends through a bore 15b in the pivot pin 15 and a receiving bore in the support rail 12. Thereby pivot pin 15 and bearing axle 21 extend through the horizontal axis of the sphere allowing the sphere to rotate about the horizontal axis. An elongated securing means 16 which also comprises a rounded hollow cut out 17 is used to extend and fit over the insert 14 and pivot pin to secure the insert 14 within the cut out 13. Although the support rail 12 in figure 4a shows only one cut out 13 and one insert 14, the rail could be extended to include a series of cut outs for receiving more than one insert.

As with the first embodiment the rail 12 may be fitted, for example to an edge of a panel of a tractor cab, the exterior panel 12b of the rail 1 on the exterior of the cab and the interior panel 12a on the interior of the cab. Alternatively, the rail 12 need not be used and instead the cut out 13 may be formed in the edge of a cab panel. The securing means 16 may be used to secure the insert within the cut out by placing it in abutment with the rail 1 or cab panel edge. The securing means may be connected to a cab panel such as a cab window. Alternatively, the securing means may be formed from an edge of a cab panel fitted above the insert, for example a cab window and which abuts with the support rail or the edge of the lower panel.

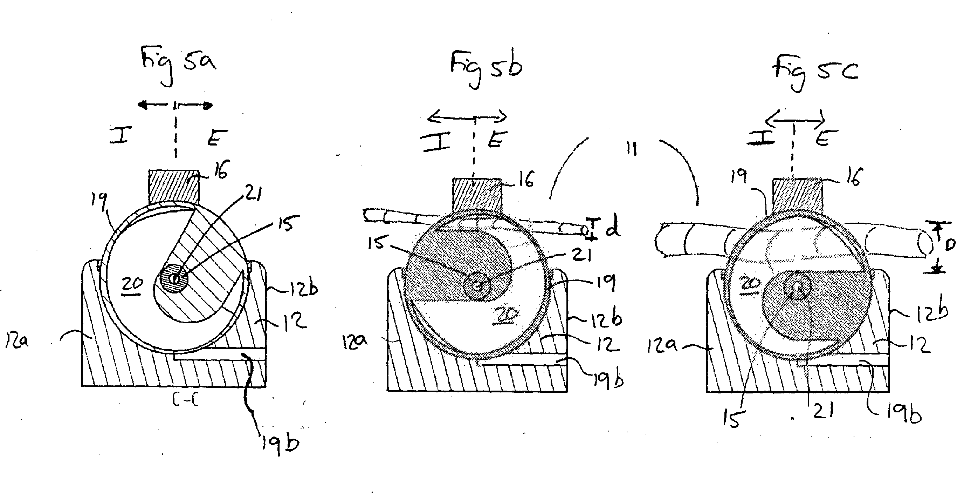

Figures 5a to 5c show a cross section of figure 4b along line c-c. The arrangement sits between the interior and exterior of a tractor cab so that one side of the rail 12b is on the exterior E and one side of the rail 12a is on the interior I of the cab. The insert 14 comprises a central through bore 18 which lies in a horizontal plane when mounted on the cab panel for receiving a pivot pin 15. The insert 14 further comprises a slit 19 which extends radially inwards a short distance and runs longitudinally through two opposing antipodals around a portion of the exterior of the spherically shaped insert 14. The slit 19 leads into a generally tubular shaped hole 20 within the insert 14. The hole 20 increases in diameter towards the centre of the insert 14 as it extends in length along the slit 19. Since the slit only extends around a portion of the surface of the insert 14 there is a portion of the insert 14 which comprises neither a slit 19, nor a hole 20. The slit is provided with a soft, compressible material for example, a rubber material such as nitrile butadiene rubber (NBR), ethylene propylene diene monomer (m-class) rubber (EPDM), styrene butadiene rubber (SBR), or a silicone rubber. The support rail 12 also comprises a drainage element 19b which can drain away fluid which has entered the hollow through the slit of the insert. If the support rail is not used, a drainage element could be formed in the cut out to drain away any fluid which has entered the hollow.

By rotating the insert, as can be seen figures 5a to 5c a different portion of the hole 20 can be accessed through the slit 19. In figures 5b and 5c a cable, or pipe 11 of a smaller diameter, d and of a larger diameter, D are shown respectively fitted through the insert 14. The tubular hole 20 may have for example a diameter which increases from 6mm to 22 mm to accommodate cables having dimensions within this range.

By removing the securing means 16 a cable, or pipe can be pressed into the slit 19. The securing means can then be replaced and the cable pulled to rotate the insert 14 until the cable fits snugly in the hole and is held embedded within the insert. At this point the insert stops rotating and the arrangement is closed. Any fluid which enters the arrangement from the exterior will end up in the drainage element from which it can be easily disposed of. Depending on the diameter of the cable/pipe being used, the hole can be rotated until the corresponding sized portion of the hole is found. This arrangement therefore allows cables of differing thicknesses to be inserted through a sealable hole in a panel.

When no cable/pip is fitted, the insert 14 behaves as a closure member when rotated to the position in figure 5a sealing the hole 20 from the exterior.

## Claims

1. A sealing arrangement for the passage of a cable, or pipe through the panel of a vehicle cab, the arrangement comprising an insert (3, 14) for insertion into a complementary cut out (2, 13) in an edge of the vehicle cab, the insert having a hole (4, 20) through which the cable, or pipe can pass and a slit (10, 19) joining the hole to an edge of the insert in order to allow the cable or pipe to be inserted into the hole and a first securing means (7, 16) for holding the insert in the cut out, **characterised in that** a closure member (9a, 14) is provided for closing the hole when no cable or pipe is passing through the insert.

2. An arrangement according to claim 1 wherein the closure member (9a) is a plug.

3. An arrangement according to claim 1 or claim 2 in which a second securing means (9b) is provided to hold the closure member in the hole.

4. An arrangement according to any preceding claims in which the insert has a formation (5) in a peripheral edge portion which engages a formation surrounding the cut out (2) to prevent the insert from moving out of the cut out in a direction generally parallel to the direction in which the cable or pipe extends through the insert.

5. An arrangement according to any preceding claim in which the first securing means (7) comprises a first generally U shaped member one limb (7a) of which is supported from the cab and the other limb (7b) of which engages a locating formation in the insert (3) to hold the insert in the cut out.

6. An arrangements according to claim 3 in which the second securing means (9b) comprises a second generally U shaped member one limb (9c) of which is supported from the closure member (9a) and the other limb (9d) of which engages a second locating formation in the insert to hold the closure member in the insert.

7. An arrangement as claimed in claim 1 wherein the insert (14) is spherically shaped and is pivotally mounted for movement in the complementary cut out (13).

8. An arrangement as claimed in claim 7 wherein the slit (19) extends around at least a portion of the surface of the spherically shaped insert.

9. An arrangement as claimed in claim 8 wherein the slit (19) is provided with a compressible material.

10. An arrangement as claimed in any of claims 7 to 9 wherein the hole (20) extends along the slit (19) and increases in depth towards the centre of the spherically shaped insert (14).

11. An arrangement as claimed in any preceding claim wherein the cut out is connected to a drain (19b) for collecting any fluid which enters the cut out.

12. An arrangement according to any preceding claim in which a plurality of inserts (3, 14) are provided for use in corresponding cut outs (2, 13) provided in a support rail (1, 12) for attachment to the cab to define a length of the window aperture.

13. An arrangement according to claim 12 wherein the support rail (1, 12) is received in a recess formed in an edge of a window aperture of the cab.

## Patentansprüche

1. Dichtungsanordnung für den Durchtritt eines Kabels oder Rohrs durch das Panel oder die Platte einer Kabine eines Fahrzeugs, wobei die Dichtungsanordnung einen Einsatz (3, 14) zum Einsetzen in eine komplementäre Aussparung oder einen komplementären Ausschnitt (2, 13) an einer Kante, einem Rand oder einem Rahmen der Kabine des Fahrzeugs aufweist, wobei der Einsatz ein Loch (4, 20), durch das das Kabel oder Rohr durchtreten kann, und einen Schlitz (10, 19), der das Loch mit einem Rand des Einsatzes verbindet, um zu ermöglichen, dass das Kabel oder Rohr in das Loch eingebracht wird, und ein erstes Sicherungsmittel (7, 16) zum Halten des Einsatzes in der Aussparung oder dem Ausschnitt aufweist, **dadurch gekennzeichnet, dass** ein Verschlusselement (9a, 14) vorgesehen ist zum Verschließen des Lochs, wenn kein Kabel oder Rohr durch den Einsatz durchtritt.

2. Dichtungsanordnung nach Anspruch 1, wobei das Verschlusselement (9a) ein Stopfen ist.

3. Dichtungsanordnung nach Anspruch 1 oder Anspruch 2, bei der ein zweites Sicherungsmittel (9b) vorgesehen ist, um das Verschlusselement in dem Loch zu halten.

4. Dichtungsanordnung nach einem der vorhergehenden Ansprüche, bei der der Einsatz in einem Umfangsrandabschnitt eine Ausformung (5) hat, die in eine die Aussparung oder den Ausschnitt (2) umgebende Ausformung eingreift, um eine Bewegung des Einsatzes aus der Aussparung oder dem Ausschnitt in eine Richtung im Wesentlichen parallel zu der Richtung, in der sich das Kabel oder Rohr durch den Einsatz erstreckt, zu verhindern.

5. Dichtungsanordnung nach einem der vorhergehenden Ansprüche, bei der das erste Sicherungsmittel (7) ein erstes, im Wesentlichen U-förmiges Element aufweist, von dem ein Schenkel (7a) an der Kabine abgestützt ist und ein anderer Schenkel (7b) in eine die Position vorgebende Ausformung in dem Einsatz (3) eingreift, um den Einsatz in der Aussparung oder dem Ausschnitt zu halten.

6. Dichtungsanordnung nach Anspruch 3, bei der das zweite Sicherungsmittel (9b) ein zweites, im Wesentlichen U-förmiges Element aufweist, von dem ein Schenkel (9c) an dem Verschlusselement (9a) abgestützt ist und ein anderer Schenkel (9d) in eine zweite, die Position vorgebende Ausformung in dem Einsatz eingreift, um das Verschlusselement in dem Einsatz zu halten.

7. Dichtungsanordnung nach Anspruch 1, wobei der Einsatz (14) kugelförmig ist und für eine Bewegung in dem komplementären Ausschnitt oder der komplementären Aussparung (13) verschwenkbar montiert ist.

8. Dichtungsanordnung nach Anspruch 7, wobei sich der Schlitz (19) um zumindest einen Teil der Oberfläche des kugelförmigen Einsatzes herum erstreckt.

9. Dichtungsanordnung nach Anspruch 8, wobei der Schlitz (19) mit einem kompressiblen Material ausgestattet ist.

10. Dichtungsanordnung nach einem der Ansprüche 7 bis 9, wobei sich das Loch (20) entlang des Schlitzes (19) erstreckt und zu dem Zentrum des kugelförmigen Einsatzes (14) hin in seiner Tiefe zunimmt.

11. Dichtungsanordnung nach einem der vorhergehenden Ansprüche, wobei die Aussparung oder der Ausschnitt mit einem Abfluss (19b) zum Sammeln von in die Aussparung oder den Ausschnitt eintretender Flüssigkeit verbunden ist.

12. Dichtungsanordnung nach einem der vorhergehenden Ansprüche, bei der mehrere Einsätze (3, 14) vorgesehen sind für einen Gebrauch in entsprechenden Aussparungen oder Ausschnitten (2, 13), die in einer Trag- oder Halteschiene (1, 12) zur Befestigung an der Kabine vorgesehen sind, um eine Länge der Fensteröffnung vorzugeben.

13. Dichtungsanordnung nach Anspruch 12, wobei die Trag- oder Halteschiene (1, 12) in einer Vertiefung aufgenommen ist, die an einer Kante, einem Rand oder einem Rahmen einer Fensteröffnung der Kabine gebildet ist.

## Revendications

1. Agencement d'étanchéité destiné à assurer le passage d'un câble, ou d'une tuyauterie, à travers le panneau d'une cabine de véhicule, l'agencement comprenant un insert (3, 14) destiné à être inséré dans une découpe complémentaire (2, 13) sur un bord de la cabine de véhicule, l'insert comportant un orifice (4, 20) à travers lequel le câble, ou la tuyauterie, peut passer et une fente (10, 19) reliant l'orifice à un bord de l'insert afin de permettre l'insertion du câble ou tuyauterie dans l'orifice et un premier moyen de fixation (7, 16) destiné à maintenir l'insert dans la découpe, **caractérisé en ce qu'**un élément d'obturation (9a, 14) est agencé de manière à obturer l'orifice lorsque aucun câble ou tuyauterie ne passe à travers l'insert.

2. Agencement selon la revendication 1, dans lequel l'élément d'obturation (9a) est un obturateur.

3. Agencement selon la revendication 1 ou 2, dans lequel un second moyen de fixation (9b) est agencé de manière à maintenir l'élément d'obturation dans l'orifice.

4. Agencement selon l'une quelconque des revendications précédentes, dans lequel l'insert comporte une moulure (5) sur une partie de bord périphérique qui est couplée à une moulure entourant la découpe (2) de manière à empêcher le déplacement de l'insert hors de la découpe suivant une direction sensiblement parallèle à la direction dans laquelle s'étend le câble ou tuyauterie à travers l'insert.

5. Agencement selon l'une quelconque des revendications précédentes, dans lequel le premier moyen de fixation (7) comprend un premier élément sensiblement en forme de U dont une branche (7a) est supportée par la cabine et l'autre branche (7b) est couplée à une moulure de positionnement sur l'insert (3) afin de maintenir l'insert dans la découpe.

6. Agencement selon la revendication 3, dans lequel le second moyen de fixation (9b) comprend un élément sensiblement en forme de U dont une branche (9c) est supportée par l'élément d'obturation (9a) et l'autre branche (9d) est couplée à une seconde moulure de positionnement sur l'insert afin de maintenir l'élément d'obturation sur l'insert.

7. Agencement selon la revendication 1, dans lequel l'insert (14) est formé de manière sphérique et est monté avec liberté de pivotement afin de permettre un mouvement dans la découpe complémentaire (13).

8. Agencement selon la revendication 7, dans lequel la fente (19) s'étend autour d'au moins une partie de la surface de l'insert formé de manière sphérique.

9. Agencement selon la revendication 8, dans lequel la fente (19) est agencée avec un matériau compressible.

10. Agencement selon l'une quelconque des revendications 7 à 9, dans lequel l'orifice (20) s'étend le long de la fente (19) et sa profondeur augmente vers le centre de l'insert formé de manière sphérique (14).

11. Agencement selon l'une quelconque des revendications précédentes, dans lequel la découpe est reliée à un drain (19b) afin de collecter tout fluide qui entre dans la découpe.

12. Agencement selon l'une quelconque des revendications précédentes, dans lequel une pluralité d'inserts (3, 14) est agencée en vue d'une utilisation dans des découpes correspondantes (2, 13) formées sur un rail de support (1, 12) afin d'assurer la fixation à la cabine de manière à définir une longueur de l'ouverture de fenêtre.

13. Agencement selon la revendication 12, dans lequel le rail de support (1, 12) est reçu dans une cavité formée sur un bord d'une ouverture de fenêtre de la cabine.
